(19) Europäisches Patentamt
European Patent Office
Office européen des brevets

(11) **EP 2 312 684 B1**

(12) **EUROPEAN PATENT SPECIFICATION**

(45) Date of publication and mention
of the grant of the patent:
**23.03.2016 Bulletin 2016/12**

(21) Application number: **09802981.2**

(22) Date of filing: **29.07.2009**

(51) Int Cl.:
*H01M 10/052* (2010.01)     *H01M 10/0569* (2010.01)
*H01M 6/16* (2006.01)

(86) International application number:
**PCT/JP2009/063475**

(87) International publication number:
**WO 2010/013739 (04.02.2010 Gazette 2010/05)**

(54) **SOLVENT FOR DISSOLUTION OF ELECTROLYTIC SALT OF LITHIUM SECONDARY BATTERY**

LÖSUNGSMITTEL ZUR AUFLÖSUNG DES ELEKTROLYTSALZES EINER
LITHIUMSEKUNDÄRBATTERIE

SOLVANT POUR LA DISSOLUTION DE SEL ÉLECTROLYTIQUE DE BATTERIE SECONDAIRE AU
LITHIUM

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.07.2008 JP 2008196526**

(43) Date of publication of application:
**20.04.2011 Bulletin 2011/16**

(73) Proprietor: **Daikin Industries, Ltd.**
**Osaka 530-8323 (JP)**

(72) Inventors:
• **KOH, Meiten**
**Settsu-shi**
**Osaka 566-8585 (JP)**
• **SAKATA, Hideo**
**Settsu-shi**
**Osaka 566-8585 (JP)**
• **NAKAZAWA, Hitomi**
**Settsu-shi**
**Osaka 566-8585 (JP)**
• **YAMAUCHI, Akiyoshi**
**Settsu-shi**
**Osaka 566-8585 (JP)**
• **ARIMA, Hiroyuki**
**Settsu-shi**
**Osaka 566-8585 (JP)**

(74) Representative: **Hoffmann Eitle**
**Patent- und Rechtsanwälte PartmbB**
**Arabellastraße 30**
**81925 München (DE)**

(56) References cited:
WO-A1-2008/007734     WO-A1-2008/078626
WO-A1-2008/078626     JP-A- 2002 343 424
JP-A- 2003 317 803     JP-A- 2005 135 906
JP-A- 2005 243 490     JP-A- 2007 335 406
JP-A- 2008 103 330     JP-A- 2009 110 949

**Description**

TECHNICAL FIELD

The present invention relates to a composition suitable as a solvent for dissolving an electrolyte salt of a lithium secondary cell, a non-aqueous electrolytic solution comprising the solvent and an electrolyte salt, and a lithium secondary cell using the non-aqueous electrolytic solution.

BACKGROUND ART

Demands on characteristics of a non-aqueous electrolytic solution of a lithium secondary cell have been rigidified year by year. One of such demands is to solve a problem with safety (for example, incombustibility and breakdown resistance) at over-charging.

In order to solve this problem, there are known compounds such as biphenyl, cyclohexylbenzene and toluene as an overcharging inhibitor (WO 2005/048391; JP-A-2004-311442; JP-A-2005-267966; WO 2005/074067; JP-A-2003-77478; JP-A-2004-63114; JP-A-2003-132950; JP-A-2004-134261; JP-A-2005-142157 and JP-A-2005-259680).

On the other hand, the addition of a fluorine-containing solvent is proposed to enhance incombustibility (flame retardancy) without lowering performance of a non-aqueous electrolytic solution (JP-A-08-037024; JP-A-09-097627; JP-A-11-026015; JP-A_2000-294281; JP-A-2001-052737; JP-A-11-307123; JP-A-10-112334; WO 2006/088009; WO 2006/106655; WO 2006/106656; WO 2006/106657 and WO 2008/007734).

WO 2008/078626 discloses a nonaqueous electrolyte solution containing a solvent (I) for dissolving an electrolyte salt, and an electrolyte salt (II), wherein the solvent (I) contains a fluorine-containing solvent (A) selected from fluorine-containing ethers, fluorine-containing esters and fluorine-containing carbonates, a non-fluorine cyclic carbonate (B), and a non-fluorine chain carbonate (C), and further contains not more than 5 wt.-% of a surface active agent (D) relative to the total of the solvent (I).

DISCLOSURE OF INVENTION

PROBLEM TO BE SOLVED BY THE INVENTION

It is an object of the present invention to provide a composition suitable as a solvent for a non-aqueous electrolytic solution which provides a lithium secondary cell being excellent specifically in discharge capacity, rate characteristic and further cycle characteristic and has improved incombustibility (safety), a non-aqueous electrolytic solution prepared using the solvent, and further a lithium secondary cell.

MEANS TO SOLVE THE PROBLEM

The present invention relates to a composition suitable as a solvent for dissolving an electrolyte salt of a lithium secondary cell, which comprises

(I) at least one fluorine-containing solvent selected from the compounds of formulae (IA), (IB) and (IC):

$$Rf^1\text{-}O\text{-}Rf^2 \qquad (IA)$$

wherein $Rf^1$ is fluorine-containing $C_{3-6}$-alkyl and $Rf^2$ is fluorine-containing $C_{2-6}$-alkyl;

$$Rf^3\text{-}C(=O)O\text{-}Rf^4 \qquad (IB)$$

wherein $Rf^3$ is optionally fluorine-containing $C_{1-2}$-alkyl and $Rf^4$ is optionally fluorine-containing $C_{1-4}$-alkyl, and at least one of $Rf^3$ and $Rf^4$ contains fluorine;

$$Rf^5\text{-}OC(=O)O\text{-}Rf^6 \qquad (IC)$$

wherein $Rf^5$ is fluorine-containing $C_{1-4}$-alkyl and $Rf^6$ is optionally fluorine-containing $C_{1-4}$-alkyl;
(II) a fluorine-containing aromatic compound wherein a part of or all H is replaced by F; which compound

- is contained in an amount of 0.1-5 vol.-%, and
- is selected from monofluorobenzene, difluorobenzene, perfluorobenzene, trifluoromethyl benzene, difluorotoluene and difluoroanisole;

(III) other carbonate which is a cyclic carbonate (IIIA) and a non-fluorine-containing chain carbonate (IIIB);

wherein the amount of the solvent (I), based on the total amount of (I), (II) and (III), is 20-60 vol.-%.

It is preferable that the cyclic carbonate (IIIA) is one of ethylene carbonate, propylene carbonate and 4-fluoro-1,3-dioxolan-2-one or a mixture thereof, from the viewpoint of good cycle characteristic.

It is preferable that the non-fluorine-containing chain carbonate (IIIB) is one of dimethyl carbonate, methyl ethyl carbonate and diethyl carbonate or a mixture thereof, from the viewpoint of good rate characteristic.

It is preferable that the fluorine-containing aromatic compound (II) is a fluorine-containing aromatic compound obtained by replacing a part or the whole of hydrogen atoms of benzene, toluene, xylene, anisole or biphenyl by fluorine atom since the enhancement of oxidation resistance can be taken into account by bonding fluorine atoms.

It is preferable that the fluorine-containing aromatic compound (II) is monofluorobenzene, difluorobenzene, perfluorobenzene, trifluoromethyl benzene, difluorotoluene, difluoroanisole or fluorobiphenyl, from the viewpoint of good oxidation resistance.

The present invention also relates to a non-aqueous electrolytic solution of a lithium secondary cell comprising the present composition and an electrolyte salt.

Further, the present invention relates to a lithium secondary cell using the non-aqueous electrolytic solution of the present invention.

EFFECT OF THE INVENTION

In the present invention, the fluorine-containing aromatic compound (II), in which a part or the whole of hydrogen atoms is replaced by fluorine atom, exhibits specifically excellent effect of inhibiting heat generation at overcharging and provides improved safety, and by using this fluorine-containing aromatic compound (II) together with the fluorine-containing solvent (I) and the other carbonate (III) which is a cyclic carbonate (IIIA) and a non-fluorine-containing chain carbonate (IIIB), there can be provided a composition suitable as a solvent for a non-aqueous electrolytic solution providing a lithium secondary cell being excellent specifically in discharge capacity, rate characteristic and further cycle characteristic, an electrolytic solution using the solvent and further a lithium secondary cell.

BRIEF DESCRIPTION OF DRAWINGS

Fig. 1 is a diagrammatic perspective view of the laminate cell prepared in Test 1.
Fig. 2 is a diagrammatic plan view of the laminated cell prepared in Test 1.
Fig. 3 is a graph showing a relation between temperature (°C) and calorific value (heat flow: mW) measured in Test 1. It is seen that the heat generation starting temperature of Examples 1 and 2 is higher.

EXPLANATION OF SYMBOLS IN THE DRAWINGS

1　Positive electrode
2　Negative electrode
3　Separator
4　Positive electrode terminal
5　Negative electrode terminal
6　Aluminum-laminated casing

BEST MODE FOR CARRYING OUT THE INVENTION

The composition of the present invention comprises the fluorine-containing solvent (I), the fluorine-containing aromatic compound (II), in which a part or the whole of hydrogen atoms is replaced by fluorine atom, and the other carbonate (III).Each component and proportions thereof are explained below.

(I) The fluorine-containing solvent (I)

The fluorine-containing solvent (I) is at least one selected from a fluorine-containing ether (IA), a fluorine-containing ester (IB) and a fluorine-containing chain carbonate (IC))

By containing the fluorine-containing solvent (I), there can be obtained an action of giving flame retardancy of the electrolytic solution, an action of improving low-temperature characteristics, and an effect of improving rate characteristic and oxidation resistance.

The fluorine-containing ethers (IA) are compounds of the formula $Rf^1ORf^2$ wherein $Rf^1$ is fluorine-containing $C_{3-6}$-alkyl and $Rf^2$ is fluorine-containing $C_{2-6}$-alkyl. They are preferred from the viewpoint of good compatibility with other solvents and proper boiling point.

Examples of $Rf^1$ are $HCF_2CF_2CH_2$-, $HCF_2CF_2CF_2CH_2$-, $HCF_2CF_2CF_2CF_2CH_2$-, $CF_3CF_2CH_2$-, $CF_3CFHCF_2CH_2$-, $HCF_2CF(CF_3)CH_2$-, and $CF_3CF_2CH_2CH_2$-, and examples of $Rf^2$ are $-CF_2CF_2H$, $-CF_2CFHCF_3$, $-CF_2CF_2CF_2H$, $-CH_2CH_2CF_3$, $-CH_2CFHCF_3$ and $-CH_2CH_2CF_2CF_3$.

Examples of the fluorine-containing ether (IA) are one or more of $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $HCF_2CF_2CH_2OCH_2CFHCF_3$ and $CF_3CF_2CH2OCH_2CFHCF_3$, and among these, from the viewpoint of good compatibility with other solvents and satisfactory rate characteristic, $HCF_2CF_2CH_2OCF_2CF_2H$, $CF_3CF_2CH_2OCF_2CF_2H$, $HCF_2CF_2CH_2OCF_2CFHCF_3$ and $CF_3CF_2CH_2OCF_2CFHCF_3$ are especially preferred.

The fluorine-containing esters (IB) are compounds of the formula $Rf^3COORf^4$ wherein $Rf^3$ is optionally fluorine-containing $C_{1-2}$-alkyl and $Rf^4$ is optionally fluorine-containing $C_{1-4}$-alkyl, and at least one of $Rf^3$ and $Rf^4$ contains fluorine. The show high flame retardancy and good compatibility with other solvents.

Examples of $Rf^3$ are $HCF_2$-, $CF_3$-, $CF_3CF_2$-, $HCF_2CF_2$-, $CH_3CF_2$-, $CF_3CH_2$-, $CH_3$- and $CH_3CH_2$-, and among these, from the viewpoint of satisfactory rate characteristic, $CF_3$- and $HCF_2$- are especially preferred.

Examples of $Rf^4$ are $-CF_3$, $-CF_2CF_3$, $-CH_2CF_3$, $-CH_2CH_2CF_3$, $-CH(CF_3)_2$, $-CH_2CF_2CFHCF_3$, $-CH_2C_2F_5$, $-CH_2CF_2CF_2H$, $-CH_2CH_2C_2F_5$, $-CH_2CF_2CF_3$ and $-CH_2CF_2CF_2CF_3$, and non-fluorine-containing alkyl groups such as $-CH_3$, $-C_2H_5$, $-C_3H_7$ and $-CH(CH_3)CH_3$, and among these, from the viewpoint of good compatibility with other solvents, $-CH_2CF_3$, $-CH_2C_2F_5$, $-CH(CF_3)_2$, $-CH_2CF_2CF_2H$, $-CH_3$ and $-C_2H_5$ are especially preferred.

Examples of the fluorine-containing ester (IB) are one or more of:

1. fluorine-containing esters, in which both of $Rf^3$ and $Rf^4$ are fluorine-containing alkyl groups:

$CF_3C(=O)OCH_2CF_3$, $CF_3C(=O)OCH_2CF_2CF_3$, $CF_3C(=O)OCH_2CF_2CF_2H$, $HCF_2C(=O)OCH_2CF_3$, $HCF_2C(=O)OCH_2CF_2CF_3$, $HCF_2C(=O)OCF_2CF_2H$

2. fluorine-containing esters, in which $Rf^3$ is a fluorine-containing alkyl group: $CF_3C(=O)OCH_3$,

$CF_3C(=O)OCH_2CH_3$, $HCF_2C(=O)OCH_3$, $HCF_2C(=O)OCH_2CH_3$, $CH_3CF_2C(=O)OCH_3$, $CH_3CF_2C(=O)OCH_2CH_3$, $CF_3CF_2C(=O)OCH_3$, $CF_3CF_2C(=O)OCH_2CH_3$

3. fluorine-containing esters, in which $Rf^4$ is a fluorine-containing alkyl group:

$CH_3C(=O)OCH_2CF_3$, $CH_3C(=O)OCH_2CF_2CF_3$, $CH_3C(=O)OCH_2CF_2CF_2H$, $CH_3CH_2C(=O)OCH_2CF_3$, $CH_3CH_2C(=O)OCH_2CF_2CF_3$, $CH_3CH_2C(=O)OCH_2CF_2CF_2H$,

and among these, the above-mentioned 2. fluorine-containing esters, in which $Rf^3$ is a fluorine-containing alkyl group and 3. fluorine-containing esters, in which $Rf^4$ is a fluorine-containing alkyl group are preferred. Among these, $CF_3C(=O)OCH_3$, $CF_3C(=O)OCH_2CH_3$, $HCF_2C(=O)OCH_3$, $HCF_2C(=O)OCH_2CH_3$, $CH_3C(=O)OCH_2CF_3$ and $CH_3C(=O)OCH_2CF_2CF_3$ are especially preferred from the viewpoint of good compatibility with other solvents and satisfactory rate characteristic.

The fluorine-containing chain carbonates (IC) are compounds of the formula $Rf^5OCOORf^6$ wherein $Rf^5$ is fluorine-containing $C_{1-4}$-alkyl and $Rf^6$ is optionally fluorine-containing $C_{1-4}$-alkyl. They show high flame retardancy and satisfactory rate characteristic.

Examples of $Rf^5$ are $CF_3$-, $C_2F_5$-, $(CF_3)_2CH$-, $CF_3CH_2$-, $C_2F_5CH_2$-, $HCF_2CF_2CH_2$- and $CF_2CFHCF_2CH_2$-, and examples of $Rf^6$ are fluorine-containing alkyl groups such as $CF_3$-, $C_2F_5$-, $(CF_3)_2CH$-, $CF_3CH_2$-, $C_2F_5CH_2$-, $HCF_2CF_2CH_2$- and $CF_2CFHCF_2CH_2$- and non-fluorine-containing alkyl groups such as $-CH_3$, $-C_2H_5$, $-C_3H_7$ and $-CH(CH_3)CH_3$. Among these, especially preferred $Rf^5$ are $CF_3CH_2$- and $C_2F_5CH_2$-, and especially preferred $Rf^6$ are $CF_3CH_2$-, $C_2F_5CH_2$-, $-CH_3$ and $-C_2H_5$, from the viewpoint of proper viscosity, good compatibility with other solvents and satisfactory rate characteristic.

Examples of the fluorine-containing chain carbonate (IC) are one or more of fluorine-containing chain carbonates such as $CF_3CH_2OCOOCH_2CF_3$, $CF_3CF_2CH_2OCOOCH_2CF_2CF_3$, $CF_3CF_2CH_2OCOOCH_3$, $CF_3CH_2OCOOCH_3$ and $CF_3CH_2OCOOCH_2CH_3$, and among these, from the viewpoint of proper viscosity, high flame retardancy, good compatibility with other solvents and satisfactory rate characteristic, $CF_3CH_2OCOOCH_2CF_3$, $CF_3CF_2CH_2OCOOCH_2CF_2CF_3$, $CF_3CH_2OCOOCH_3$ and $CF_3CH_2OCOOCH_2CH_3$ are especially preferred. Also, there can be exemplified compounds described, for example, in JP6-21992A, JP2000-327634A and JP2001-256983A.

Among the fluorine-containing solvents (I), the fluorine-containing ether (IA) and the fluorine-containing chain carbonate (IC) are preferred from the viewpoint of proper viscosity, excellent solubility of an electrolyte salt and satisfactory rate characteristic, and especially the fluorine-containing ether (IA) is preferred from the viewpoint of satisfactory cycle characteristic.

The fluorine-containing ether (IA), the fluorine-containing ester (IB) and the fluorine-containing chain carbonate (IC) may be used alone or may be used in combination thereof. In the case of combination use, a combination of (IA) and (IB) and a combination of (IA) and (IC) are preferred from the viewpoint of low viscosity and good compatibility with other solvents.

When the total amount of (I), (II) and (III) is assumed to be 100 vol.-%, the fluorine-containing solvent (I) is contained in an amount of 20-60 vol.-% . This is excellent in an action of giving flame retardancy of the electrolytic solution, an action of improving low-temperature characteristics, and further effects of improving rate characteristic and oxidation resistance. Further, it is preferable that the fluorine-containing solvent (I) is contained in an amount of 30-50 vol.-%, especially 30-45 vol.-%, since safety is especially enhanced.

(II) Fluorine-containing aromatic compound, in which a part or the whole of hydrogen atoms is replaced by fluorine atoms

The fluorine-containing aromatic compound (II) is selected from monofluorobenzene, difluorobenzene, perfluorobenzene, trifluoromethyl benzene, difluorotoluene and difluoroanisole. They show a good oxidation resistance.

When the total amount of (I), (II) and (III) is assumed to be 100 vol.-%, the fluorine-containing aromatic compound (II) is contained in an amount of 0.1-5 vol.-%.

(III) Other carbonate

In the present invention, other known carbonate, which is a mixture of a cyclic carbonate (IIIA) and a non-fluorine-containing chain carbonate (IIIB), is mixed in addition to (I) and (II). This provides good low-temperature characteristics and satisfactory cycle characteristic.

(IIIA) Cyclic carbonate

The cyclic carbonate (IIIA) may be non-fluorine-containing cyclic carbonate and fluorine-containing cyclic carbonate.

Examples of the non-fluorine-containing cyclic carbonate (IIIA) are one or more of ethylene carbonate, propylene carbonate, butylene carbonate and vinyl ethylene carbonate. Among these, ethylene carbonate (EC) and propylene carbonate (PC) are high in dielectric constant and especially excellent in ability of dissolving an electrolyte salt, and therefore, are preferred for the electrolytic solution of the present invention.

This non-fluorine-containing cyclic carbonate is especially excellent in ability of dissolving an electrolyte salt, and has property of improving rate characteristic and dielectric constant.

Also, it is possible to blend vinylene carbonate as an additional (optional) component for improving cycle characteristic. The amount thereof is desirably 0.1-10 vol.-% based on the whole electrolytic solution.

Examples of the fluorine-containing cyclic carbonate are 4-fluoro-1,3-dioxolan-2-one, 4,5-difluoro-1,3-dioxolan-2-one, 4-trifluoromethyl-1,3-dioxolan-2-one, 4-monofluoromethyl-1,3-dioxolan-2-one, 4,5-dimethyl-4,5-difluoro-1,3-dioxolan-2-one, and 4,5-dimethyl-4-fluoro-1,3-dioxolan-2-one, and especially 4-fluoro-1,3-dioxolan-2-one (monofluoroethylene carbonate) is preferred.

With respect to the cyclic carbonate (IIIA), non-fluorine-containing cyclic carbonate and fluorine-containing cyclic carbonate may be used together.

(IIIB) Non-fluorine-containing chain carbonate

Examples of the non-fluorine-containing chain carbonate (IIIB) are one or more of hydrocarbon type chain carbonates such as $CH_3CH_2OCOOCH_2CH_3$ (diethyl carbonate: DEC), $CH_3CH_2OCOOCH_3$ (methyl ethyl carbonate: MEC), $CH_3OCOOCH_3$ (dimethyl carbonate: DMC) and $CH_3OCOOCH_2CH_2CH_3$ (methyl propyl carbonate). Among these, DEC, MEC and DMC are preferred from the viewpoint of low viscosity and good low-temperature characteristics.

It is preferable that when the total amount of (I), (II) and (III) is assumed to be 100 vol.-%, cyclic carbonate (IIIA) is contained in an amount of 10-50 vol.-% and the non-fluorine-containing chain carbonate (IIIB) is contained in an amount of up to 79.9 vol.-%, from the viewpoint of further improvement in safety and good cell characteristics..

When the amount of cyclic carbonate (IIIA) is too large, its compatibility with other component is lowered, and there is a case where a phase separation from other component may occur especially at low temperature atmosphere (for example, -30°C to -20°C) such as outdoor temperature in wintertime and inside temperature of a refrigerator. From this point of view, a preferred upper limit is 35 vol.-%, further 30 vol.-%. On the contrary, when the amount thereof is too small, the ability of the whole solvents for dissolving the electrolyte salt is lowered, and a target concentration (0.8 mol/l or more) of an electrolyte salt cannot be achieved.

The non-fluorine-containing chain carbonate (IIIB) is low in viscosity and therefore, has an effect of improving low-temperature characteristics. Accordingly, in the case where low-temperature characteristics need to be improved, the non-fluorine-containing chain carbonate may be blended in a proper amount. However, since the non-fluorine-containing chain carbonate is relatively low in flash point, its amount is desirably to be such an extent not to impair safety of the cell.

The composition of the present invention comprises the fluorine-containing solvent (I), the fluorine-containing aromatic compound (II) and the other carbonate (III) as essential components.

For example, when containing no fluorine-containing solvent (I) and using only the fluorine-containing aromatic compound (II) and the other carbonate (III) such as a hydrocarbon solvent, in the case of a voltage being increased, for example, in the case of an over-charge test explained infra, the fluorine-containing aromatic compound (II) is polymerized to form a film on the surface of the electrode and inhibit a reaction with the electrolytic solution, thereby preventing thermorunaway to a certain extent. However, in such a situation not caused due to a voltage, for example, in the case of an over-charge test explained infra, when a separator is broken due to the temperature and an inside short-circuit occurs between the electrodes, the other carbonate (III) is ignited and undergoes firing, and therefore, there is a case where safety is not enough when no fluorine-containing solvent (I) is contained.

Also, when using a non-fluorine-containing aromatic compound but not the fluorine-containing aromatic compound (II), by blending the fluorine-containing solvent (I), the electrolytic solution itself is hardly fired and safety is increased, but since an oxidation potential of the non-fluorine-containing aromatic compound is inherently low, the compound is polymerized, for example, during a charge and discharge cycle, and in some cases, cell characteristics are lowered.

In the composition of the present invention, the target problem of the present invention can be solved only by the use of the components (I), (II) and (III), but other solvents known as solvents for the non-aqueous electrolytic solution may be further blended. Kinds and amounts of such solvents need to be an extent not to impair the solution of the problem of the present invention.

The present invention also relates to the electrolytic solution for a lithium secondary cell comprising the present composition and an electrolyte salt.

Examples of the electrolyte salt to be used for the non-aqueous electrolytic solution of the present invention include $LiClO_4$, $LiAsF_6$, $LiBF_4$, $LiPF_6$, $LiN(SO_2CF_3)_2$ and $LiN(SO_2C_2F_5)_2$, and from the viewpoint of good cycle characteristic, $LiPF_6$, $LiBF_4$, $LiN(SO_2CF_3)_2$, $LiN(SO_2C_2F_5)_2$ and combination thereof are especially preferred.

In order to secure practical performance of the lithium secondary cell, the concentration of the electrolyte salt of not less than 0.5 mol/l, further not less than 0.8 mol/l is demanded. An upper limit is usually 1.5 mol/l. The solvent for dissolving an electrolyte salt of the present invention has ability of dissolving an electrolyte salt at a concentration satisfying these requirements.

To the non-aqueous electrolytic solution of the present invention may be added additives such as a flame retardant, a surfactant, an additive for increasing dielectric constant, a cycle characteristic and rate characteristic improver and an over-charging inhibitor without deviation from the specified volume percentages of the components (I), (II) and (III) to an extent not to impair the effect of the present invention.

With respect to a flame retardant, known flame retardants can be used. Especially a phosphoric ester may be added to impart incombustibility (non-ignition property). Ignition can be prevented by mixing a phosphoric ester in an amount of 1-10 vol.-% based on the solvent for dissolving an electrolyte salt.

Examples of the phosphoric ester are fluorine-containing alkylphosphoric ester, non-fluorine-containing alkylphosphoric ester and arylphosphoric ester, and fluorine-containing alkylphosphoric ester is preferred since it highly contributes to make the electrolytic solution nonflammable and an effect of making the electrolytic solution nonflammable is increased even if its amount is small.

Examples of the fluorine-containing alkylphosphoric ester are fluorine-containing dialkylphosphoric esters disclosed in JP11-233141A, cyclic alkylphosphoric esters disclosed in JP11-283669A, and fluorine-containing trialkylphosphoric esters.

Since the fluorine-containing trialkylphosphoric esters have high ability of giving incombustibility and satisfactory compatibility with the components (I), (II) and (III), the amount thereof can be decreased, and even when the amount is 1-8 vol.-%, further 1-5 vol.-%, ignition can be prevented.

Preferred examples of the fluorine-containing trialkylphosphoric esters are those of the formula $(RfO)_3$-P=O, wherein Rf is $CF_3$-, $CF_3CF_2$-, $CF_3CH_2$-, $HCF_2CF_2$- or $CF_3CFHCF_2$-. Especially, tri-2,2,3,3,3-pentafluoropropyl phosphate and tri-2,2,3,3-tetrafluoropropyl phosphate are preferred.

Further, fluorine-containing lactone and fluorine-containing sulfolane can also be exemplified as a flame retardant.

A surfactant may be added in order to improve capacity property and rate characteristic.

Any of cationic surfactants, anionic surfactants, nonionic surfactants and amphoteric surfactants may be used as a surfactant, and fluorine-containing surfactants are preferred from the viewpoint of good cycle characteristic and rate characteristic.

For example, there are preferably exemplified fluorine-containing carboxylates and fluorine-containing sulfonates.

Examples of fluorine-containing carboxylates include $HCF_2C_2F_6COO\text{-}Li^+$, $C_4F_9COO\text{-}Li^+$, $C_5F_{11}COO\text{-}Li^+$, $C_6F_{13}COO\text{-}Li^+$, $C_7F_{15}COO\text{-}Li^+$, $C_8F_{17}COO\text{-}Li^+$, $HCF_2C_2F_6COO\text{-}NH_4^+$, $C_4F_9COO\text{-}NH_4^+$, $C_5F_{11}COO\text{-}NH_4^+$, $C_6F_{13}COO\text{-}NH_4^+$, $C_7F_{15}COO\text{-}NH4^+$, $C_8F_{17}COO\text{-}NH_4^+$, $HCF_2C_2F_6COO\text{-}NH(CH_3)_3^+$, $C_4F_9COO\text{-}NH(CH_3)_3^+$, $C_5F_{11}COO\text{-}NH(CH_3)_3^+$, $C_6F_{13}COO\text{-}NH(CH_3)_3^+$, $C_7F_{15}COO\text{-}NH(CH3)3^+$ and $C_8F_{17}COO\text{-}NH(CH_3)_3^+$,. Examples of fluorine-containing sulfonates include $C_4F_9SO_3\text{-}Li^+$, $C_6F_{13}SO_3\text{-}Li^+$ $C_8F_{17}SO_3\text{-}Li^+$, $C_4F_9SO_3\text{-}NH_4^+$, $C_6F_{13}SO_3\text{-}NH4^+$, $C_8F_{17}SO_3\text{-}NH_4^+$, $C_4F_9SO_3\text{-}NH(CH_3)_3^+$, $C_6F_{13}SO_3\text{-}NH(CH_3)_3^+$ and $C_8F_{17}SO_3\text{-}NH(CH_3)_3^+$.

The amount of surfactant is preferably 0.01-2 % by mass based on the whole solvents for dissolving the electrolyte salt from the viewpoint of decreasing a surface tension of the electrolytic solution without lowering charge and discharge cycle characteristic.

Examples of an additive for increasing dielectric constant include sulfolane, methyl sulfolane, γ-butyrolactone, γ-valerolactone, acetonitrile and propionitrile.

In the present invention, other overcharging inhibitors may be used together. Examples of other overcharging inhibitor include cyclohexylbenzene, dichloroaniline, difluoroaniline and toluene. When the amount thereof is large, there is a high possibility of lowering cell characteristics, and therefore, it is desirable to add to an extent not to impair cell characteristics.

For improving rate characteristic, tetrahydrofuran, silicate compounds and the like are effective. In addition, it is effective to add vinylene carbonate for improving cycle characteristic and to add 1,2-dialkyl-1,2-difluoroethylene carbonate for inhibiting generation of gas during storing.

The present invention also relates to the lithium secondary cell using the non-aqueous electrolytic solution of the present invention. The lithium secondary cell of the present invention is provided with a positive electrode, a negative electrode, a separator and the electrolytic solution of the present invention, and it is especially preferable that an active material for the positive electrode to be used on the positive electrode is at least one selected from cobalt compound oxides, nickel compound oxides, manganese compound oxides, iron compound oxides and vanadium compound oxides, since a high output lithium secondary cell having high energy density is obtained.

An example of cobalt compound oxide is LiCoO2, an example of nickel compound oxide is $LiNiO_2$, and an example of manganese compound oxide is $LiMnO_2$. Also there may be used compound oxides of CoNi represented by $LiCo_xNi_{1-x}O_2$ (0<x<1), compound oxides of CoMn represented by $LiCo_xMn_{1-x}O_2$ (0<x<1), compound oxides of NiMn represented by $LiNi_xMn_{1-x}O_2$ (0<x<1) and $LiNi_xMn_{2-x}O_4$ (0<x<2) and compound oxides of NiCoMn represented by $LiNi_{1-x-y}Co_xMn_yO_2$ (0<x<1, 0<y<1, 0<x+y<1). In these lithium-containing compound oxides, a part of metal elements such as Co, Ni and Mn may be replaced by at least one metal element such as Mg, Al, Zr, Ti or Cr.

Examples of iron compound oxide are $LiFeO_2$ and $LiFePO_4$, and an example of vanadium compound oxide is $V_2O_5$.

Among the above-mentioned compound oxides, nickel compound oxides or cobalt compound oxides are preferred as an active material for a positive electrode from the viewpoint that capacity can be made high. Especially in a small size lithium ion secondary cell, the use of cobalt compound oxides is desirable from the viewpoint of high energy density and safety.

In the present invention, especially for the uses on large size lithium secondary cells for hybrid cars and distributed power source, since high output is demanded, it is preferable that particles of an active material for a positive electrode mainly comprise secondary particles, and an average particle size of the secondary particles is not more than 40 μm and fine particles having an average primary particle size of not more than 1 μm are contained in an amount of from 0.5 to 7.0 % by volume.

When fine particles having an average primary particle size of not more than 1 μm are contained, an area thereof coming into contact with an electrolytic solution is increased and lithium ion can be scattered more rapidly between the electrode and the electrolytic solution, thereby enabling output performance to be improved.

An example of an active material to be used on a negative electrode in the present invention is carbon materials, and in addition, metallic oxides and metallic nitrides to which lithium ion can be inserted. Examples of carbon materials are natural graphite, artificial graphite, pyrocarbon, coke, mesocarbon microbeads, carbon fiber, activated carbon and pitch-coated graphite. Examples of metallic oxides to which lithium ion can be inserted are tin- or silicon- or titanium-containing metallic compounds, for example, tin oxide, silicon oxide and lithium titanate, and an example of metallic nitrides is $Li_{2.6}Co_{0.4}N$.

A separator which can be used in the present invention is not limited particularly, and there are exemplified microporous polyethylene films, microporous polypropylene films, microporous ethylene-propylene copolymer films, microporous polypropylene/polyethylene two-layer films, and microporous polypropylene/polyethylene/polypropylene three-layer films. Also, there are films prepared by coating aramid resin on a separator or films prepared by coating a resin comprising polyamide imide and alumina filler on a separator which are made for the purpose of enhancing safety such as prevention of short-circuit due to Li dendrite.

The lithium secondary cell of the present invention are useful as a large size lithium secondary cell for hybrid cars and distributed power source, and in addition, are useful as a small size lithium secondary cell for a mobile phone and a portable remote terminal.

EXAMPLES

The present invention is explained by means of the following non-limiting examples. Compounds used in the following examples and comparative examples are as follows.

Component (I)

| | |
|---|---|
| (IA-1): | $HCF_2CF_2CH_2OCF_2CF_2H$ |
| (IA-2): | $HCF_2CF_2CH_2OCF_2CFHCF_3$ |
| (IA-3): | $CF_3CF_2CH_2OCF_2CF_2H$ |
| (IB-1): | $CF_3COOCH_2CF_2CF_2H$ |
| (IC-1): | $CF_3CH_2OCOOCH_2CF_3$ |
| (IC-2): | $CF_3CH_2OCOOCH_3$ |

Component (II)

(IIA): Fluorobenzene
(IIB): Trifluoromethyl benzene
(IIC): 1,4-difluorobenzene
(IID): Perfluorobenzene
(IIE): 3,5-difluoroanisole

Component (IIIA)

(IIIA-1): Ethylene carbonate
(IIA-2): Propylene carbonate
(IIIA-3): 4-fluoro-1,3-dioxolan-2-one

Component (IIIB)

(IIIB-1): Dimethyl carbonate
(IIIB-2): Methyl ethyl carbonate
(IIIB-3): Diethyl carbonate

Component (IV)

(IVA): Cyclohexylbenzene

Electrolyte salt (V)

| | |
|---|---|
| (VA): | $LiPF_6$ |
| (VB): | $LiN(SO_2CF_3)_2$ |
| (VC): | $LiN(SO_2C_2F_5)_2$ |
| (VD): | $LiBF_4$ |

EXAMPLE 1

$HCF_2CF_2CH_2OCF_2CF_2H$ (IA-1) as the component (I), fluorobenzene (IIA) as the component (II), ethylene carbonate (IIIA-1) as the component (IIIA) and dimethyl carbonate (IIIB-1) as the component (IIIB) were mixed in the vol.-% ratio of 40/0.5/20/39.5, and to this solvent for dissolving an electrolyte salt was added $LiPF_6$ as the electrolyte salt to give 1.0 mol/l of its concentration, followed by sufficiently stirring at 25°C. Thus, the non-aqueous electrolytic solution of the present invention was prepared.

EXAMPLE 2

The non-aqueous electrolytic solution of the present invention was prepared in the same manner as in Example 1 except that trifluoromethyl benzene (IIB) was used as the component (II) in an amount of 5 vol.-%, dimethyl carbonate (IIIB-1) was used in an amount of 35 vol.-%, and the vol.-% ratio of (I)/(IIB)/(IIIA-1)/(IIIB-1) was changed to 40/5/20/35.

COMPARATIVE EXAMPLE 1

A comparative non-aqueous electrolytic solution was prepared in the same manner as in Example 1 except that $HCF_2CF_2CH_2OCF_2CF_2H$ (IA-1) as the component (I), ethylene carbonate (IIIA-1) as the component (IIIA) and dimethyl carbonate (IIIB-1) as the component (IIIB) were mixed in the vol.-% ratio of (IA-1)/(IIIA-1)/(IIIB-1) of 40/20/40, and no component (II) was added.

COMPARATIVE EXAMPLE 2

$HCF_2CF_2CH_2OCF_2CF_2H$ (IA-1) as the component (I), cyclohexylbenzene (IVA) instead of the component (II), ethylene carbonate (IIA-1) as the component (IIIA) and dimethyl carbonate (IIIB-1) as the component (IIIB) were mixed in the vol.-% ratio of (I)/(IV)/(IIIA-1)/(IIIB-1) of 40/0.5/20/39.5, and to this solvent for dissolving an electrolyte salt was added $LiPF_6$ as the electrolyte salt to give 1.0 mol/l of its concentration, followed by sufficiently stirring at 25°C. Thus, the non-aqueous electrolytic solution of the present invention was prepared.

The following Test 1 was carried out using these non-aqueous electrolytic solutions.

Test 1 (Measurement of calorific value)

(Preparation of laminated cell)

An active material for a positive electrode prepared by mixing LiCoO2, carbon black and polyvinylidene fluoride (trade name KF-1000 available from KUREHA CORPORATION) in a ratio of 90/3/7 (mass percent ratio) was dispersed in N-methyl-2-pyrrolidone to be formed into a slurry which was then uniformly coated on a positive electrode current

collector (15 μm thick aluminum foil) and dried to form a layer made of a mixture of positive electrode materials. Then, the coated aluminum foil was subjected to compression molding with a roller press, and after cutting, a lead wire was welded thereto to prepare a strip-like positive electrode.

Separately, a styrene-butadiene rubber dispersed in distilled water was added to artificial graphite powder (trade name MAG-D available from Hitachi Chemical Co., Ltd.) to give a solid content of 6 % by mass, followed by mixing with a disperser to be formed into a slurry which was then uniformly coated on a negative electrode current collector (10 μm thick copper foil) and dried to form a layer made of a mixture of negative electrode materials. Then, the coated copper foil was subjected to compression molding with a roller press, and after cutting and drying, a lead wire was welded thereto to prepare a strip-like negative electrode.

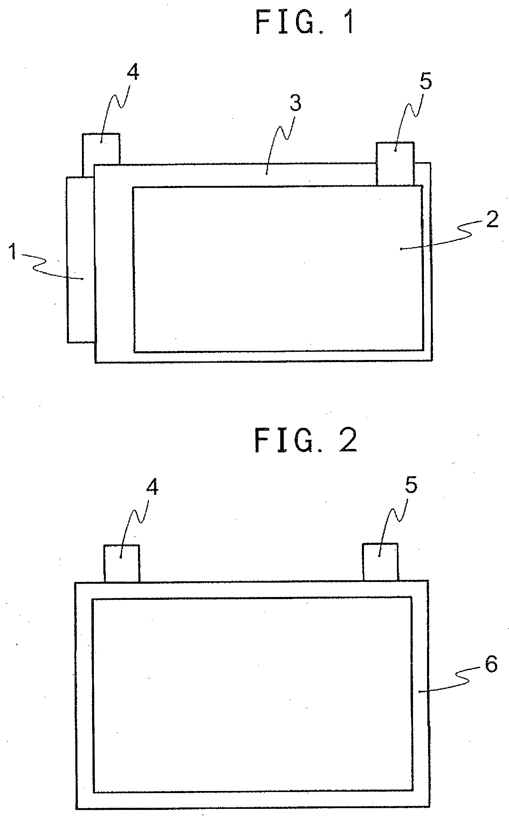

As shown in the diagrammatic perspective view of Fig. 1, the above strip-like positive electrode 1 was cut into a size of 40 mm × 72 mm (with a 10 mm × 10 mm positive electrode terminal 4), and the above strip-like negative electrode 2 was cut into a size of 42 mm × 74 mm (with a 10 mm × 10 mm negative electrode terminal 5). A lead wire was welded to each terminal. A 20 μm thick microporous polyethylene film was cut into a size of 78 mm × 46 mm to make a separator 3, and the positive electrode and negative electrode were set so as to sandwich the separator between them. These were put in the aluminum-laminated casing 6 as shown in Fig. 2, and then 2 ml each of the electrolytic solutions prepared in Examples 1 and 2 and Comparative Examples 1 and 2 was poured into the casing 6, followed by sealing to make a laminated cell having a capacity of 72 mAh.

Charge/discharge cycle was such that charging of the cell was continued at 1.0 C at 4.2 V until a charging current reached 1/10 C, discharging was continued at a current equivalent to 0.2 C until 3.0 V was reached, and subsequently, charging of the cell was continued at 1.0 C at 4.2 V until a charging current reached 1/10 C.

After charging and discharging, the laminated cell was disassembled in a glow box, and the positive electrode was taken out. The positive electrode and 0.5 ml of the electrolytic solution of Example 1 or 2 or Comparative Example 1 or 2 were put in a cell for measurement of calorific value to make a calorific value measuring cell.

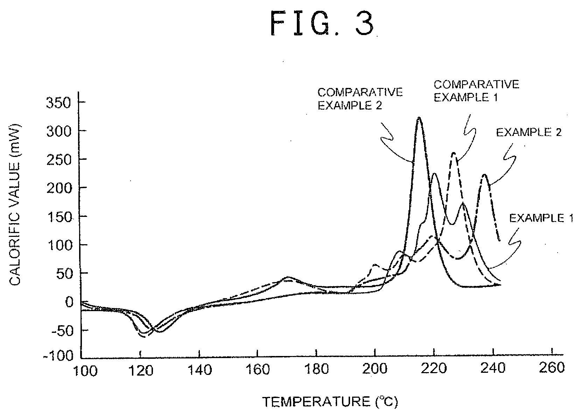

The calorific value measuring cell was set on a calorimeter C80 available from Setaram Instrumentation, and the cell was heated up to 100-250°C at a temperature elevating rate of 0.5°C/min to measure calorific value. The results are shown in Fig. 3.

From the results shown in Fig. 3, when comparing the electrolytic solutions of Examples 1 and 2 with the electrolytic solutions of Comparative Examples 1 and 2, it is seen that the electrolytic solutions of Examples 1 and 2 are safe since its heat generation starting temperature (peak around 150°C) is higher and the total calorific value is smaller.

COMPARATIVE EXAMPLE 3, REFERENCE EXAMPLE 4, AND EXAMPLES 3 AND 5

Non-aqueous electrolytic solutions of the present invention were prepared in the same manner as in Example 1 except that amounts of the component (IA), component (IIA), component (IIIA-1) and component (IIIB-1) were changed as shown in Table 1.

Any of the obtained solvents for dissolving an electrolyte salt were low in viscosity, and mixing thereof with an electrolyte salt was easy.

COMPARATIVE EXAMPLE 4

A comparative non-aqueous electrolytic solution was prepared in the same manner as in Example 1 except that no component (I) was added, and the component (IIA), the component (IIIA-1) and the component (IIIB-1) were mixed in the vol.-% ratio of (IIA)/(IIIA-1)/(IIIB-1) of 0.5/30/69.5.

COMPARATIVE EXAMPLE 5

A comparative non-aqueous electrolytic solution was prepared in the same manner as in Example 1 except that $HCF_2CF_2CH_2OCF_2CF_2H$ (IA-1) as the component (I), ethylene carbonate (IIIA-1) as the component (IIIA) and dimethyl carbonate (IIIB-1) as the component (IIIB) were mixed in the vol.--% ratio of (IA-1)/(IIIA-1)/(IIIB-1) of 10/20/70, and no component (II) was added.

EXAMPLES 6-8

Non-aqueous electrolytic solutions of the present invention were prepared in the same manner as in Example 1 except that the following (IIC), (IID) and (IIE) were used as the component (II) as shown in Table 2.

(IIC): 1,4-Difluorobenzene
(IID): Perfluorobenzene

(IIE): 3,5-Difluoroanisole

EXAMPLES 9-12

Non-aqueous electrolytic solutions of the present invention were prepared in the same manner as in Example 1 except that the following (IA-2), (IA-3), (IB-1) and (IC-1) were used as the component (I) as shown in Table 3.

$$(IA\text{-}2): \quad HCF_2CF_2CH_2OCF_2CFHCF_3$$

$$(IA\text{-}3): \quad CF_3CF_2CH_2OCF_2CF_2H$$

$$(IB\text{-}1): \quad CF_3COOCH_2CF_2CF_2H$$

$$(IC\text{-}1): \quad CF_3CH_2OCOOCH_2CF_3$$

EXAMPLES 13-18

Non-aqueous electrolytic solutions of the present invention were prepared in the same manner as in Example 1 except that combination of the component (IIIA) and the component (IIIB) was changed to that shown in Table 4.

EXAMPLES 19-21

Non-aqueous electrolytic solutions of the present invention were prepared in the same manner as in Example 1 except that $LiN(O_2SCF_3)_2$, $LiN(O_2SC_2F_5)_2$ or $LiBF_4$ was used as an electrolyte salt instead of LiPF6 as shown in Table 5.

EXAMPLES 22-28

Non-aqueous electrolytic solutions of the present invention were prepared in the same manner as in Example 1 except that each component shown in Table 6 was used.

Test 2 (Measurement of cell characteristics)

A cylindrical secondary cell was made by the following method.
The strip-like positive electrode made in Test 1 was placed on the strip-like negative electrode made in Test 1 with a 20 μm thick microporous polyethylene film (separator) being sandwiched between them, followed by winding spirally to make a laminated electrode of spiral-wound structure. In this case, winding was carried out so that the un-coated surface of the positive electrode current collector faces outward. After this, the laminated electrode was put in a cylindrical bottomed cell case having an outer diameter of 18 mm, and welding of lead wires for the positive electrode and negative electrode was carried out.
Then, electrolytic solutions prepared in Examples and Comparative Examples were poured into the cell case, and after the electrolytic solution had been sufficiently penetrated in the separator, etc., sealing of the case, pre-charging and aging were carried out to make cylindrical lithium secondary cells.
Discharge capacity, rate characteristic, cycle characteristic and safety at over-charging of these lithium secondary cells were determined by the following methods. The results of Examples 1 and 3 to 6 and Comparative Examples 1-4 are shown in Table 1, the results of Examples 1, 2 and 7-9 are shown in Table 2, the results of Examples 10-13 are shown in Table 3, the results of Examples 14-19 are shown in Table 4 and the results of Examples 20-22 are shown in Table 5.

(Discharge capacity)

When a charge/discharging current is represented by C and 1 C is assumed to be 1,800 mA, discharge capacity is measured under the following charge/discharge measuring conditions. Discharge capacity is indicated by an index, assuming the result of the discharge capacity of Comparative Example 3 to be 100.

Charge and discharge conditions

Charging: Charging is continued at 1.0 C at 4.2 V until a charging current reaches 1/10 C (CC.CV charge).
Discharging: 1 C, 3.0 V cut (CC discharge)

(Rate characteristic)

Charging is continued at 1.0 C at 4.2 V until a charging current reaches 1/10 C, and discharging is continued at a current equivalent to 0.2 C until a voltage of 3.0 V is reached, and then discharge capacity is determined. Subsequently, charging is continued at 1.0 C at 4.2 V until a charging current reaches 1/10 C, and discharging is continued at a current equivalent to 2 C until a voltage of 3.0 V is reached, and then discharge capacity is determined. The discharge capacity at 2 C and the discharge capacity at 0.2 C are substituted in the following equation to obtain a rate characteristic.

$$\text{Rate characteristic (\%)} = \text{Discharge capacity (mAh) at 2 C} /$$

$$\text{Discharge capacity (mAh) at 0.2 C} \times 100$$

(Cycle characteristic)

Charge and discharge cycle to be conducted under the above-mentioned charge and discharge conditions (Charging is continued at 1.0 C at 4.2 V until a charging current reaches 1/10 C, and discharging is continued at a current equivalent to 1 C until a voltage of 3.0 V is reached) is assumed to be one cycle, and discharge capacity after the first cycle and discharge capacity after the hundredth cycle are measured. Cycle characteristic is represented by a cycle maintenance factor obtained by the following equation.

$$\text{Cycle maintenance factor (\%)} = \text{Discharge capacity (mAh) after the}$$

$$\text{hundredth cycle} / \text{Discharge capacity (mAh) after the first cycle} \times 100$$

(Over-charge test 1)

The cylindrical cells of Examples and Comparative Examples are discharged at a current equivalent to 1 CmA until a voltage of 3.0 V is reached, and over-charging is carried out at a current equivalent to 1 CmA with determining the upper limit voltage to 12V, and whether or not firing or bursting occurs is examined. When firing or bursting occurs, it is shown by ×, and when neither firing nor bursting occurs, it is shown by ○.

(Over-charge test 2)

After the cylindrical cells of Examples and Comparative Examples are discharged up to 3.0 V at a current equivalent to 1 CmA, then over-charging is carried out at a current equivalent to 3 CmA with determining the upper limit voltage to 12V, and whether firing or bursting occurs is examined. When firing or bursting occurs, it is shown by ×, and when neither firing nor bursting occurs, it is shown by ○.

(Over-charge test 3)

After the cylindrical cells of Examples and Comparative Examples are discharged up to 3.0 V at a current equivalent to 1 CmA, the cells are wound with glass wool, and then over-charging is carried out at a current equivalent to 1 CmA with determining the upper limit voltage to 12V, and whether firing or bursting occurs is examined. When firing or bursting occurs, it is shown by ×, and when neither firing nor bursting occurs, it is shown by ○.

From the results of Table 1, it is seen that when the fluorine-containing aromatic compound (fluorobenzene) is added in various amounts, discharge capacity, rate characteristic and cycle characteristic are improved more as compared with those of Comparative Example 1 where such a compound is not added. Also, it is seen that there is exhibited a large effect on discharge capacity, rate characteristic and cycle characteristic as compared with Comparative Example 2 in which cyclohexylbenzene was added instead of the fluorine-containing aromatic compound and Comparative Example 4 in which the component (I) was not blended. Even in the case of 10 vol.-% of the component (IA-1) in Comparative Example 3, safety is improved by adding a very small amount of component (IIA) as compared with Comparative Example 5. From the results of over-charge tests, it is seen that safety of the cells of Examples is further improved.

From the results of Table 2, it is seen that even if a kind of the fluorine-containing aromatic compound is changed, discharge capacity, rate characteristic and cycle characteristic are improved more than those of Comparative Example 4. Also, from the results of the over-charge tests, it is seen that safety is further improved.

From the results of Table 3, it is seen that even if a fluorine-containing ether is changed to a fluorine-containing ester or a fluorine-containing cyclic carbonate, discharge capacity, rate characteristic and cycle characteristic are improved more than those of Comparative Example 4. Also, from the results of the over-charge tests, it is seen that safety is further improved.

From the results of Table 4, it is seen that even if a kind of a chain carbonate is changed, two or more chain carbonates are mixed or two or more cyclic carbonates are mixed, discharge capacity, rate characteristic and cycle characteristic are improved more than those of Comparative Example 4. Also, from the results of the over-charge tests, it is seen that safety is further improved.

From the results of Table 5, it is seen that even if an electrolyte salt is changed, discharge capacity, rate characteristic and cycle characteristic are improved more than those of Comparative Example 4. Also, from the results of the over-charge tests, it is seen that safety is further improved.

From the results of Table 6, it is seen that even in the cases of various combinations of the components (I) to (III), discharge capacity, rate characteristic and cycle characteristic are improved more than those of Comparative Example 3. Also, from the results of the over-charge tests, it is seen that safety is further improved.

TABLE 1

| | Example | | | | Comparative Example | | | | |
|---|---|---|---|---|---|---|---|---|---|
| | 1 | 3 | 4 (Reference Example) | 5 | 1 | 2 | 3 | 4 | 5 |
| Electrolytic solution | | | | | | | | | |
| Solvent components | | | | | | | | | |
| Component (I) | | | | | | | | | |
| Kind | IA-1 | IA-1 | IA-1 | IA-1 | IA-1 | IA-1 | IA-1 | - | IA-1 |
| Proportion (volume %) | 40 | 60 | 40 | 40 | 40 | 40 | 10 | - | 10 |
| Component (II) | | | | | | | | | |
| Kind | IIA | IIA | IIA | IIA | - | - | IIA | IIA | - |
| Proportion (volume %) | 0.5 | 0.5 | 10 | 5 | - | - | 0.5 | 0.5 | - |
| Component (IIIA) | | | | | | | | | |
| Kind | IIIA-1 | IIIA-1 | IIIA-1 | IIIA-1 | IIIA-1 | IIIA-1 | IIIA-1 | IIIA-1 | IIIA-1 |
| Proportion (volume %) | 20 | 20 | 20 | 20 | 20 | 20 | 20 | 30 | 20 |
| Component (IIIB) | | | | | | | | | |
| Kind | IIIB-1 | IIIB-1 | IIIB-1 | IIIB-1 | IIIB-1 | IIIB-1 | IIIB-1 | IIIB-1 | IIIB-1 |
| Proportion (volume %) | 39.5 | 19.5 | 30 | 35 | 40 | 39.5 | 69.5 | 69.5 | 70 |
| Component (IV) | | | | | | | | | |
| Kind | - | - | - | - | - | - | - | - | - |
| Proportion (volume %) | - | - | - | - | - | 0.5 | - | - | - |
| Electrolyte salt (mole/liter) | | | | | | | | | |
| LiPF$_6$ | 1.0 | 1.0 | 1.0 | 1.0 | 1.0 | 1.0 | 1.0 | 1.0 | 1.0 |
| Discharge capacity (index) | 107.2 | 105.9 | 106.3 | 106.8 | 107.0 | 98.5 | 106.8 | 100.0 | 106.9 |
| Rate characteristic (%) | 92.5 | 91.5 | 92.1 | 92.2 | 92.3 | 89.5 | 92.5 | 89.1 | 92.7 |

(continued)

| | Example | | | | Comparative Example | | | | |
|---|---|---|---|---|---|---|---|---|---|
| | 1 | 3 | 4 (Reference Example) | 5 | 1 | 2 | 3 | 4 | 5 |
| Cycle characteristic (%) | 95.8 | 95.5 | 94.8 | 95.5 | 96.0 | 93.3 | 95.5 | 87.1 | 95.6 |
| Over-charge test 1 | ○ | ○ | ○ | ○ | ○ | ○ | ○ | × | × |
| Over-charge test 2 | ○ | ○ | ○ | ○ | ○ | ○ | × | × | × |
| Over-charge test 3 | ○ | ○ | ○ | ○ | × | × | × | × | × |

TABLE 2

| | Example | | | | |
|---|---|---|---|---|---|
| | 1 | 2 | 6 | 7 | 8 |
| Electrolytic solution | | | | | |
| Solvent components | | | | | |
| Component (I) | | | | | |
| Kind | IA-1 | IA-1 | IA-1 | IA-1 | IA-1 |
| Proportion (volume %) | 40 | 40 | 40 | 40 | 40 |
| Component (II) | | | | | |
| Kind | IIA | IIB | IIC | IID | IIE |
| Proportion (volume %) | 0.5 | 5 | 0.5 | 0.5 | 0.5 |
| Component (IIIA) | | | | | |
| Kind | IIIA-1 | IIIA-1 | IIIA-1 | IIIA-1 | IIIA-1 |
| Proportion (volume %) | 20 | 20 | 20 | 20 | 20 |
| Component (IIIB) | | | | | |
| Kind | IIIB-1 | IIIB-1 | IIIB-1 | IIIB-1 | IIIB-1 |
| Proportion (volume %) | 39.5 | 35 | 39.5 | 39.5 | 39.5 |
| Electrolyte salt (mole/liter) | | | | | |
| $LiPF_6$ | 1.0 | 1.0 | 1.0 | 1.0 | 1.0 |
| Discharge capacity (index) | 107.2 | 106.5 | 106.5 | 103.5 | 107.2 |
| Rate characteristic (%) | 92.5 | 92.0 | 91.5 | 90.8 | 92.5 |
| Cycle characteristic (%) | 95.8 | 95.2 | 94.2 | 95.8 | 95.8 |
| Over-charge test 1 | ○ | ○ | ○ | ○ | ○ |
| Over-charge test 2 | ○ | ○ | ○ | ○ | ○ |
| Over-charge test 3 | ○ | ○ | ○ | ○ | ○ |

TABLE 3

| | Example | | | |
|---|---|---|---|---|
| | 91 | 10 | 11 | 12 |
| Electrolytic solution | | | | |
| Solvent components | | | | |
| Component (I) | | | | |
| Kind | IA-2 | IA-3 | IB-1 | IC-1 |
| Proportion (volume %) | 40 | 40 | 40 | 40 |
| Component (II) | | | | |
| Kind | IIA | IIA | IIA | IIA |
| Proportion (volume %) | 0.5 | 0.5 | 0.5 | 0.5 |

(continued)

| | Example | | | |
|---|---|---|---|---|
| | 91 | 10 | 11 | 12 |
| Component (IIIA) | | | | |
| Kind | IIIA-1 | IIIA-1 | IIIA-1 | IIIA-1 |
| Proportion (volume %) | 20 | 20 | 20 | 20 |
| Component (IIIB) | | | | |
| Kind | IIIB-1 | IIIB-1 | IIIB-1 | IIIB-1 |
| Proportion (volume %) | 39.5 | 39.5 | 39.5 | 39.5 |
| Electrolyte salt (mole/liter) | | | | |
| LiPF$_6$ | 1.0 | 1.0 | 1.0 | 1.0 |
| Discharge capacity (index) | 105.9 | 105.6 | 104.0 | 104.6 |
| Rate characteristic (%) | 92.5 | 92.4 | 93.7 | 92.8 |
| Cycle characteristic (%) | 95.8 | 95.6 | 95.4 | 95.1 |
| Over-charge test 1 | ○ | ○ | ○ | ○ |
| Over-charge test 2 | ○ | ○ | ○ | ○ |
| Over-charge test 3 | ○ | ○ | ○ | ○ |

TABLE 4

| | Example | | | | | |
|---|---|---|---|---|---|---|
| | 13 | 14 | 15 | 16 | 17 | 18 |
| Electrolytic solution | | | | | | |
| Solvent components | | | | | | |
| Component (I) | | | | | | |
| Kind | IA-1 | IA-1 | IA-1 | IA-1 | IA-1 | IA-1 |
| Proportion (volume %) | 40 | 40 | 40 | 40 | 40 | 40 |
| Component (II) | | | | | | |
| Kind | IIA | IIA | IIA | IIA | IIA | IIA |
| Proportion (volume %) | 0.5 | 0.5 | 0.5 | 0.5 | 0.5 | 0.5 |
| Component (IIIA) | | | | | | |
| Kind | IIIA-1+IIIA-2 | IIIA-1 | IIIA-1 | IIIA-1 | IIIA-1 | IIIA-1 |
| Proportion (volume %) | 20+10 | 20 | 20 | 20 | 20 | 20 |
| Component (IIIB) | | | | | | |
| Kind | IIIB-1 | IIIB-2 | IIIB-3 | IIIB-1+IIIB-2 | IIIB-1+IIIB-3 | IIIB-2+IIIB-3 |
| Proportion (volume %) | 29.5 | 39.5 | 39.5 | 20+19.5 | 20+19.5 | 20+19.5 |
| Electrolyte salt (mole/liter) | | | | | | |
| LiPF$_6$ | 1.0 | 1.0 | 1.0 | 1.0 | 1.0 | 1.0 |
| Discharge capacity (index) | 106.7 | 106.8 | 106.4 | 106.8 | 106.6 | 106.5 |
| Rate characteristic (%) | 92 | 92.1 | 91.8 | 92.1 | 91.8 | 91.5 |
| Cycle characteristic (%) | 95.6 | 95.5 | 96.1 | 95.7 | 95.5 | 95.8 |
| Over-charge test 1 | ○ | ○ | ○ | ○ | ○ | ○ |
| Over-charge test 2 | ○ | ○ | ○ | ○ | ○ | ○ |

TABLE 5

| | Example | | |
|---|---|---|---|
| | 19 | 20 | 21 |
| Electrolytic solution | | | |
| Solvent components | | | |
| Component (I) | | | |
| Kind | IA-1 | IA-1 | IA-1 |
| Proportion (volume %) | 40 | 40 | 40 |
| Component (II) | | | |
| Kind | IIA | IIA | IIA |
| Proportion (volume %) | 0.5 | 0.5 | 0.5 |
| Component (IIIA) | | | |
| Kind | IIIA-1 | IIIA-1 | IIIA-1 |
| Proportion (volume %) | 20 | 20 | 20 |
| Component (IIIB) | | | |
| Kind | IIIB-1 | IIIB-1 | IIIB-1 |
| Proportion (volume %) | 39.5 | 39.5 | 39.5 |
| Electrolyte salt (mole/liter) | | | |
| $LiPF_6$ | - | - | - |
| $LiN(SO_2CF_3)_2$ | 1.0 | - | - |
| $LiN(SO_2C_2F_5)_2$ | - | 1.0 | - |
| $LiBF_4$ | - | - | 1.0 |
| Discharge capacity (index) | 106.7 | 106.5 | 106.8 |
| Rate characteristic (%) | 92.3 | 92.1 | 92.4 |
| Cycle characteristic (%) | 95.5 | 95.3 | 94.8 |
| Over-charge test 1 | ○ | ○ | ○ |
| Over-charge test 2 | ○ | ○ | ○ |

TABLE 6

| | Example | | | |
|---|---|---|---|---|
| | 22 | 23 | 24 | 25 |
| Electrolytic solution | | | | |
| Solvent components | | | | |
| Component (I) | | | | |
| Kind | IC-2 | IA-1 | IA-1+IC-2 | IA-1+IC-2 |
| Proportion (volume %) | 30 | 20 | 20+20 | 20+20 |
| Component (II) | | | | |
| Kind | IIA | IIA | IIA | IIB |
| Proportion (volume %) | 0.5 | 2 | 2 | 2 |
| Component (IIIA) | | | | |
| Kind | IIIA-1+IIIA-3 | IIIA-3 | IIIA-3 | IIIA-3 |
| Proportion (volume %) | 15+5 | 20 | 20 | 20 |
| Component (IIIB) | | | | |
| Kind | IIIB-1 | IIIB-1 | IIIB-1 | IIIB-1 |
| Proportion (volume %) | 49.5 | 58 | 38 | 38 |
| Electrolyte salt (mole/liter) | | | | |
| LiPF$_6$ | 1.0 | 1.0 | 1.0 | 1.0 |
| Discharge capacity (index) | 101.5 | 103.2 | 102.5 | 101.2 |
| Rate characteristic (%) | 91 | 93 | 91.2 | 90.8 |
| Cycle characteristic (%) | 94.2 | 95.1 | 94.3 | 95.1 |
| Over-charge test 1 | O | O | O | O |
| Over-charge test 2 | O | O | O | O |

EP 2 312 684 B1

| | Example | | |
|---|---|---|---|
| | 26 | 27 | 28 |
| Electrolytic solution | | | |
| Solvent components | | | |
| Component (I) | | | |
| Kind | IA-1+IC-2 | IA-1 | IA-1+IC-2 |
| Proportion (volume %) | 20+20 | 30 | 20+10 |
| Component (II) | | | |
| Kind | IIE | IIC | IID |
| Proportion (volume %) | 2 | 2 | 2 |
| Component (IIIA) | | | |
| Kind | IIIA-3 | IIIA-1+IIIA-3 | IIIA-1+IIIA-3 |
| Proportion (volume %) | 20 | 15+5 | 15+5 |
| Component (IIIB) | | | |
| Kind | IIIB-1 | IIIB-1 | IIIB-1 |
| Proportion (volume %) | 38 | 48 | 48 |
| Electrolyte salt (mole/liter) LiPF$_6$ | 1.0 | 1.0 | 1.0 |
| Discharge capacity (index) | 102.5 | 102.2 | 103.1 |
| Rate characteristic (%) | 91.1 | 91.1 | 91.2 |
| Cycle characteristic (%) | 94.3 | 93.5 | 92.6 |
| Over-charge test 1 | O | O | O |
| Over-charge test 2 | O | O | O |

## Claims

1. A composition suitable as a solvent for dissolving an electrolyte salt of a lithium secondary cell, which comprises

   (I) at least one fluorine-containing solvent selected from the compounds of formulae (IA), (IB) and (IC) :

   $$Rf^1\text{-}O\text{-}Rf^2 \qquad (IA)$$

   wherein $Rf^1$ is fluorine-containing $C_{3-6}$-alkyl and $Rf^2$ is fluorine-containing $C_{2-6}$-alkyl;

   $$Rf^3\text{-}C(=O)O\text{-}Rf^4 \qquad (IB)$$

   wherein $Rf^3$ is optionally fluorine-containing $C_{1-2}$-alkyl and $Rf^4$ is optionally fluorine-containing $C_{1-4}$-alkyl, and at least one of $Rf^3$ and $Rf^4$ contains fluorine;

$$Rf^5\text{-OC(=O)O-}Rf^6 \qquad (IC)$$

wherein $Rf^5$ is fluorine-containing $C_{1-4}$-alkyl and $Rf^6$ is optionally fluorine-containing $C_{1-4}$-alkyl;

(II) a fluorine-containing aromatic compound wherein a part of or all H is replaced by F; which is selected from monofluorobenzene, difluorobenzene, perfluorobenzene, trifluoromethyl benzene, difluorotoluene and difluoroanisole;

(III) other carbonate which is a cyclic carbonate (IIIA) and a non-fluorine-containing chain carbonate (IIIB);

**characterized in that** the amount of the solvent (I), based on the total amount of (I), (II) and (III), is 20-60 vol.-%, and **in that** the fluorine containing aromatic compound is contained in an amount of 0.1-5 vol.-%.

2. The composition of Claim 1, wherein the cyclic carbonate (IIIA) is one of ethylene carbonate, propylene carbonate and 4-fluoro-1,3-dioxolan-2-one or a mixture thereof.

3. The composition of Claim 1, wherein the non-fluorine-containing chain carbonate (IIIB) is one of dimethyl carbonate, methyl ethyl carbonate and diethyl carbonate or a mixture thereof.

4. A non-aqueous electrolytic solution of a lithium secondary cell comprising the composition of any of Claims 1-3 and an electrolyte salt.

5. A lithium secondary cell including the non-aqueous electrolytic solution of Claim 4.

**Patentansprüche**

1. Zusammensetzung, die als Lösungsmittel zum Auflösen eines Elektrolytsalzes einer Lithium-Sekundärzelle geeignet ist, umfassend:

(I) zumindest ein fluorhaltiges Lösungsmittel, ausgewählt aus den Verbindungen der Formeln (IA), (IB) und (IC):

$$Rf^1\text{-O-}Rf^2 \qquad (IA)$$

worin $Rf^1$ fluorhaltiges $C_{3-6}$-Alkyl ist und $Rf^2$ fluorhaltiges $C_{2-6}$-Alkyl ist;

$$Rf^3\text{-C(=O)O-}Rf^4 \qquad (IB)$$

worin $Rf^3$ gegebenenfalls fluorhaltiges $C_{1-2}$-Alkyl ist und $Rf^4$ gegebenenfalls fluorhaltiges $C_{1-4}$-Alkyl ist und zumindest eines von $Rf^3$ und $Rf^4$ Fluor enthält;

$$Rf^5\text{-OC(=O)O-}Rf^6 \qquad (IC)$$

worin $Rf^5$ fluorhaltiges $C_{1-4}$-Alkyl ist und $Rf^6$ gegebenenfalls fluorhaltiges $C_{1-4}$-Alkyl ist;

(II) eine fluorhaltige aromatische Verbindung, wobei ein Teil von oder das gesamte H durch F ersetzt ist; welche aus Monofluorbenzol, Difluorbenzol, Perfluorbenzol, Trifluormethylbenzol, Difluortoluol und Difluoranisol ausgewählt ist;

(III) ein anderes Carbonat, das ein cyclisches Carbonat (IIIA) und ein nicht-fluorhaltiges Kettencarbonat (IIIB) ist;

**dadurch gekennzeichnet, dass** die Menge an Lösungsmittel (I), bezogen auf die Gesamtmenge von (I), (II) und (III), 20 bis 60 Vol.-% beträgt und dass die fluorhaltige aromatische Verbindung in einer Menge von 0,1 bis 5 Vol.% enthalten ist.

2. Zusammensetzung gemäss Anspruch 1, wobei das cyclische Carbonat (IIIA) eines von Ethylencarbonat, Propylencarbonat und 4-Fluor-1,3-dioxolan-2-on oder eine Mischung davon ist.

3. Zusammensetzung gemäss Anspruch 1, wobei das nichtfluorhaltige Kettencarbonat (IIIB) eines von Dimethylcarbonat, Methylethylcarbonat und Diethylcarbonat oder eine Mischung davon ist.

**4.** Nicht-wässrige Elektrolytlösung einer Lithium-Sekundärzelle, umfassend eine Zusammensetzung gemäss irgendeinem der Ansprüche 1 bis 3 und ein Elektrolytsalz.

**5.** Lithium-Sekundärzelle, die eine nicht-wässrige Elektrolytlösung gemäss Anspruch 4 einschliesst.


**Revendications**

**1.** Composition adéquate comme solvant pour dissoudre un sel d'électrolyte d'une pile secondaire au lithium, qui comprend :

(I) au moins un solvant contenant du fluor choisi parmi les composés de formules (IA), (IB) et (IC) :

$$\text{Rf}^1\text{-O-Rf}^2 \qquad \text{(IA)}$$

où $\text{Rf}^1$ est un groupement alkyle en $C_{3 \text{ à } 6}$ contenant du fluor et $\text{Rf}^2$ est un groupement alkyle en $C_{2 \text{ à } 6}$ contenant du fluor ;

$$\text{Rf}^3\text{-C(=O)O-Rf}^4 \qquad \text{(IB)}$$

où $\text{Rf}^3$ est facultativement un groupement alkyle en $C_{1 \text{ à } 2}$ contenant du fluor et $\text{Rf}^4$ est facultativement un groupement alkyle en $C_{1 \text{ à } 4}$ contenant du fluor, et au moins l'un de $\text{Rf}^3$ et $\text{Rf}^4$ contient du fluor ;

$$\text{Rf}^5\text{-OC(=O)O-Rf}^6 \qquad \text{(IC)}$$

où $\text{Rf}^5$ est un groupement alkyle en $C_{1 \text{ à } 4}$ contenant du fluor et $\text{Rf}^6$ est facultativement un groupement alkyle en $C_{1 \text{ à } 4}$ contenant du fluor ;
(II) un composé aromatique contenant du fluor, dans lequel une partie ou la totalité de H est remplacée par F ; lequel composé est choisi parmi le monofluorobenzène, le difluorobenzène, le perfluorobenzène, le trifluorométhylbenzène, le difluorotoluène et le difluoroanisole ;
(III) un autre carbonate qui est un carbonate cyclique (IIIA) et un carbonate en chaîne ne contenant pas de fluor (IIIB) ;

**caractérisée en ce que** la quantité du solvant (I), rapportée à la quantité totale de (I), (II) et (III), est de 20 à 60 % en volume et le composé aromatique contenant du fluor est contenu en quantité de 0,1 à 5 % en volume.

**2.** Composition selon la revendication 1, dans laquelle le carbonate cyclique (IIIA) est l'un ou l'autre du carbonate d'éthylène, du carbonate de propylène et de la 4-fluoro-1,3-dioxolan-2-one ou d'un de leurs mélanges.

**3.** Composition selon la revendication 1, dans laquelle le carbonate en chaîne ne contenant pas de fluor (IIIB) est l'un ou l'autre du carbonate de diméthyle, du carbonate de méthyléthyle et du carbonate de diéthyle ou d'un de leurs mélanges.

**4.** Solution électrolytique non aqueuse d'une pile secondaire au lithium comprenant la composition de l'une quelconque des revendications 1 à 3 et un sel d'électrolyte.

**5.** Pile secondaire au lithium comprenant la solution électrolytique non aqueuse de la revendication 4.

# FIG. 1

# FIG. 2

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005048391 A
- JP 2004311442 A
- JP 2005267966 A
- WO 2005074067 A
- JP 2003077478 A
- JP 2004063114 A
- JP 2003132950 A
- JP 2004134261 A
- JP 2005142157 A
- JP 2005259680 A
- JP 8037024 A
- JP 9097627 A
- JP 11026015 A
- JP 2000294281 A
- JP 2001052737 A
- JP 11307123 A
- JP 10112334 A
- WO 2006088009 A
- WO 2006106655 A
- WO 2006106656 A
- WO 2006106657 A
- WO 2008007734 A
- WO 2008078626 A
- JP 6021992 A
- JP 2000327634 A
- JP 2001256983 A
- JP 11233141 A
- JP 11283669 A